# DEMANDE DE BREVET EUROPEEN

(11) **EP 0 985 807 A1**
(43) Date de publication de la demande: **15.03.2000**
(21) Numéro de dépôt: 99402005.5
(22) Date de dépôt: 06.08.1999
(51) Int. Cl.: F01N 3/20, F01N 5/02, B60H 1/18

(54) **Procédé et dispositif de dépollution des gaz d'échappement et de chauffage pour véhicule automobile à moteur à combustion interne**

(30) Priorité: 11.09.1998 FR 9811356
(71) Demandeur: RENAULT, 92109 Boulogne-Billancourt (FR)
(72) Inventeur: Allancon-Coma, Laurence, 75116 Paris (FR); Le, Bich-Vân, 92160 Antony (FR); Baerd, Sébastien, 75015 Paris (FR)

(57) **Abrégé**

Ce procédé est destiné à un véhicule automobile à moteur à combustion interne comprenant a) une ligne d'échappement (2) comportant un catalyseur d'amorçage (4) et un catalyseur principal (5) équipés de réchauffeurs (6, 7), b) un circuit de refroidissement (3) comportant un aérotherme (A).

On dispose un échangeur de chaleur (E) entre la ligne d'échappement (2)et le circuit de refroidissement (3), et on commande les réchauffeurs (6, 7) et l'échangeur (E) en fonction de phases de fonctionnement du moteur (M), pour obtenir aux entrées des catalyseurs (4, 5) et de l'aérotherme (A) des températures situées dans les plages d'efficacité de ces organes.

## Description

La présente invention est relative à un procédé et à un dispositif de dépollution des gaz d'échappement et de chauffage pour véhicule automobile à moteur à combustion interne.

Il est connu de placer sur les lignes d'échappement des véhicules à moteur à combustion interne des pots catalytiques ou « catalyseurs » destinés à réduire les rejets de composés polluants tels que les hydrocarbures imbrûlés, le monoxyde de carbone et les oxydes d'azote.

On place en amont de la ligne d'échappement, près du moteur, un catalyseur dit d'amorçage fonctionnant dans une plage de températures basses, et en aval de la ligne d'échappement, un catalyseur dit principal fonctionnant dans une plage de températures hautes.

Pour élargir les plages d'efficacité de ces deux catalyseurs, on les équipe habituellement de réchauffeurs électriques, alimentés par la batterie du véhicule automobile, destinés à élever la température des gaz d'échappement qui les traversent.

Le réchauffeur du catalyseur d'amorçage permet de rendre ce dernier opérationnel immédiatement après un démarrage à froid, et le réchauffeur du catalyseur principal permet de rendre ce dernier opérationnel dans une phase de fonctionnement transitoire du moteur où la température des gaz d'échappement est située entre les plages d'efficacité respectives des deux catalyseurs.

S'il est vrai qu'une telle installation permet de réduire de manière très significative les émissions nocives, il n'en demeure pas moins que son bilan énergétique est loin d'être satisfaisant.

En effet, la majeure partie de la chaleur produite par les réchauffeurs des catalyseurs est dissipée dans l'atmosphère avec celle des gaz d'échappement.

La présente invention a pour but principal de remédier à cet inconvénient.

On atteint ce but principal de l'invention avec un procédé de dépollution des gaz d'échappement et de chauffage pour véhicule automobile à moteur à combustion interne comprenant notamment a) une ligne d'échappement, destinée à évacuer des gaz d'échappement, comportant au moins un catalyseur d'amorçage et un catalyseur principal, chacun de ces deux catalyseurs étant équipé d'un réchauffeur de gaz d'échappement, b) un circuit de refroidissement, renfermant un liquide de refroidissement, comportant au moins un organe de chauffage tel qu'un aérotherme, remarquable en ce qu'on dispose des moyens d'échange de chaleur entre d'une part une partie de ladite ligne d'échappement comprise entre lesdits catalyseurs et d'autre part ledit circuit de refroidissement, et en ce qu'on commande lesdits réchauffeurs et lesdits moyens d'échange de chaleur en fonction de phases de fonctionnement dudit moteur, pour obtenir aux entrées desdits catalyseurs et dudit organe de chauffage des températures respectives de gaz d'échappement et de liquide de refroidissement situées dans les plages d'efficacité de ces organes.

Suivant d'autres caractéristiques du procédé suivant l'invention:
- on commande lesdits réchauffeurs et lesdits moyens d'échange de chaleur en fonction de températures de gaz d'échappement et de liquide de refroidissement relevées respectivement en certains points de ladite ligne d'échappement et dudit circuit de refroidissement,
- on relève lesdites températures aux entrées desdits catalyseurs sur ladite ligne d'échappement, et à la sortie dudit moteur et à l'entrée dudit organe de chauffage sur ledit circuit de refroidissement,
- pendant une première phase, dite de démarrage à froid, on alimente le réchauffeur dudit catalyseur d'amorçage et on transfère une partie de la chaleur ainsi transmise auxdits gaz d'échappement audit liquide de refroidissement en amont dudit organe de chauffage, pour rendre ledit organe de chauffage opérationnel immédiatement après la mise en route dudit moteur,
- pendant une deuxième phase, dite de fonctionnement transitoire de premier type, adaptée à une situation où ledit moteur est relativement peu chaud et où la température dudit liquide de refroidissement à la sortie dudit moteur est encore insuffisante pour faire fonctionner correctement ledit organe de chauffage, on éteint le réchauffeur dudit catalyseur d'amorçage, on ajuste la quantité de chaleur transmise par lesdits gaz d'échappement audit liquide de refroidissement en amont dudit organe de chauffage et on alimente -si nécessaire- le réchauffeur dudit catalyseur principal, pour optimiser la quantité de chaleur prélevée par ledit organe de chauffage sur ladite ligne d'échappement, afin d'avoir à alimenter le moins possible le réchauffeur dudit catalyseur principal,
- pendant une troisième phase, dite de fonctionnement transitoire de deuxième type, adaptée à une situation où ledit moteur est relativement chaud et où la température dudit liquide de refroidissement à la sortie dudit moteur est suffisamment élevée pour faire fonctionner correctement ledit organe de chauffage, on éteint le réchauffeur dudit catalyseur d'amorçage, on refroidit ledit liquide de refroidissement en aval dudit organe de chauffage, on n'effectue aucun échange de chaleur entre lesdits gaz d'échappement et ledit liquide de refroidissement, et on alimente -si nécessaire- le réchauffeur dudit catalyseur principal, pour éviter notamment de refroidir lesdits gaz d'échappement, afin d'avoir à alimenter le moins possible le réchauffeur dudit catalyseur principal,
- pendant une quatrième phase, dite de fonctionnement extra-urbain, adaptée à une situation où ledit moteur est très chaud, on éteint les réchauffeurs desdits catalyseurs et on transfère une partie de la chaleur desdits gaz d'échappement audit liquide de refroidissement en aval dudit organe de chauffage, pour réduire la température desdits gaz d'échappement à l'entrée dudit catalyseur principal.

Grâce à ces caractéristiques, on peut récupérer une partie de la chaleur produite par le catalyseur d'amorçage et l'utiliser pour d'autres organes du véhicule automobile, tels qu'un aérotherme destiné à chauffer l'habitacle.

On peut également ajuster la quantité de chaleur transmise par les gaz d'échappement au liquide de refroidissement afin d'alimenter électriquement le moins possible le réchauffeur du catalyseur principal.

On peut également refroidir les gaz d'échappement trop chauds pour être traités par le catalyseur principal.

L'invention porte aussi sur un dispositif permettant de mettre en oeuvre le procédé susmentionné.

D'autres caractéristiques et avantages de la présente invention apparaîtront à la lecture de la description qui va suivre et à l'examen des dessins annexés donnés uniquement à titre d'exemple, et dans lesquels:
- la figure 1A est un schéma d'ensemble d'un dispositif mettant en oeuvre le procédé suivant l'invention;
- les figures 1B à 4 sont des schémas du dispositif de la figure 1A pour quatre phases différentes de fonctionnement.

Sur ces figures, des références numériques identiques représentent des organes ou éléments identiques ou analogues.

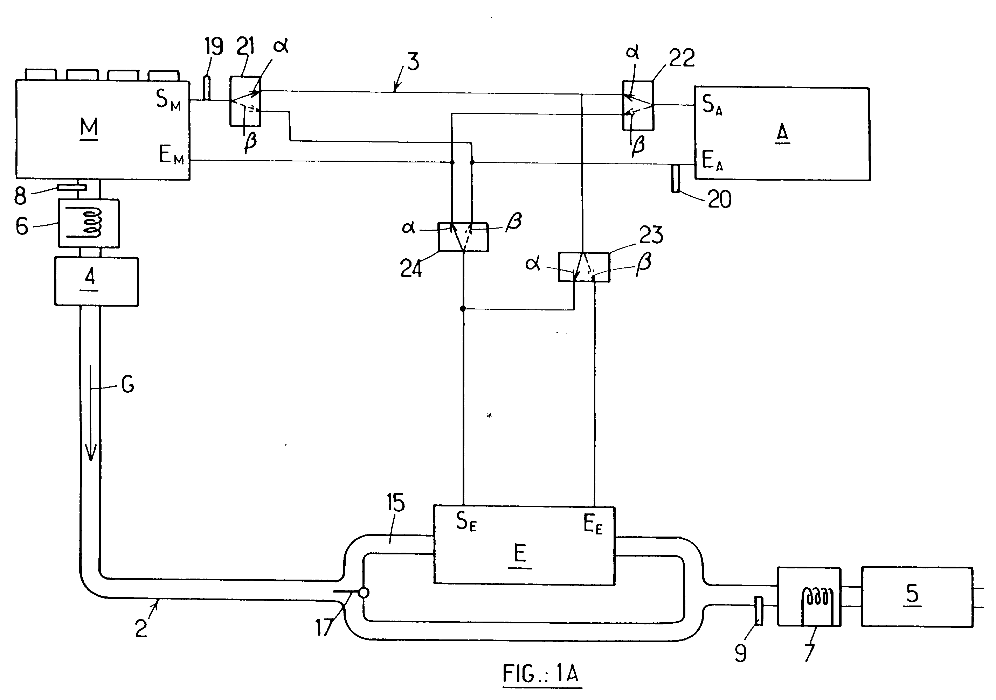

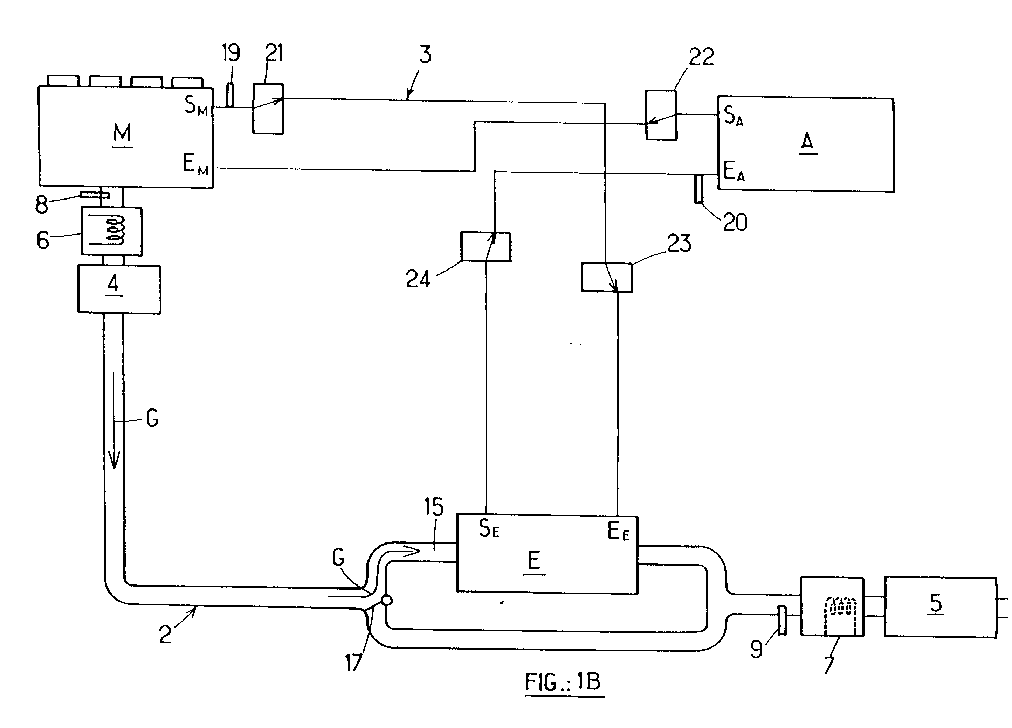

On se reporte à présent à la figure 1, sur laquelle on voit que le dispositif suivant l'invention comprend un moteur M à combustion interne propulsant un véhicule automobile (non représenté) et, reliés à ce moteur, une ligne d'échappement 2 et un circuit de refroidissement 3.

La ligne d'échappement 2, destinée à évacuer des gaz d'échappement G, comporte au moins un catalyseur d'amorçage 4 placé en amont, près du moteur M, et un catalyseur principal 5 placé en aval. Le catalyseur principal est , par exemple, un catalyseur à piégeage des oxydes d'azote lorsque le moteur fonctionne en mélange air/carburant pauvre.

Chacun de ces deux catalyseurs est équipé d'un réchauffeur électrique de gaz d'échappement 6, 7, alimenté par la batterie (non représentée) du véhicule automobile.

Des sondes de température 8, 9 sont placées en amont de ces réchauffeurs.

Selon une caractéristique du dispositif suivant l'invention, la ligne d'échappement 2 comporte, sur une partie comprise entre les deux catalyseurs 4, 5, une dérivation 15 qui traverse un échangeur de chaleur gaz-liquide E.

Une vanne de régulation du débit des gaz d'échappement 17 est située à l'entrée de la dérivation 15.

Le circuit de refroidissement 3 renferme un liquide de refroidissement et relie entre eux le moteur M, un organe de chauffage tel qu'un aérotherme A destiné à chauffer l'habitacle (non représenté) du véhicule automobile, et l'échangeur de chaleur E.

Des sondes de température 19, 20 sont placées sur le circuit de refroidissement 3 à la sortie S_{M} du moteur M et à l'entrée E_{A} de l'aérotherme A.

Un système de quatre vannes de régulation du débit du liquide de refroidissement 21, 22, 23, 24 permet, selon les états respectifs de chacune de ces vannes, de choisir le parcours et de régler le débit du liquide de refroidissement entre les entrées E_{M}, E_{A}, E_{E} et les sorties S_{M}, S_{A}, S_{E} respectives du moteur M, de l'aérotherme A et de l'échangeur E.

Afin de pouvoir décrire aisément par la suite l'état de chaque vanne, on a attribué les références α et β à chacune de leurs deux positions extrêmes, correspondant respectivement aux flèches en trait plein et à celles en pointillés sur la figure 1.

Les réchauffeurs 6, 7, et les vannes 17, 21, 22, 23, 24 sont asservis aux sondes de température 8, 9, 19, 20 par des moyens électroniques (non représentés) que l'homme du métier saura aisément fournir une fois qu'il aura pris connaissance des indications qui vont suivre.

On se reporte à présent aux figures 1B à 4, sur lesquelles on a représenté des schémas du dispositif décrit ci-dessus pour quatre phases différentes de fonctionnement.

Il faut comprendre que la durée de chacune de ces phases et les instants où elles entrent en vigueur sont corrélées au fonctionnement du moteur M par l'intermédiaire des sondes de température 8, 9, 19, 22, lesquelles permettent de commander les différents réglages dont il va être question ci-dessous.

Dans un souci de clarté, on a ôté des schémas les parties superflues du circuit de refroidissement 3, c'est-à-dire, pour chaque phase, les parties de ce circuit dans lesquelles il n'y a pas de circulation de liquide de refroidissement.

Par ailleurs, on a représenté les réchauffeurs 6, 7 en trait plein lorsqu'ils sont alimentés électriquement en permanence ou par intermittence, et en pointillés lorsqu'ils sont éteints.

La figure 1B représente le dispositif suivant l'invention dans une première phase de fonctionnement, dite « de démarrage à froid ».

Comme on peut le voir sur cette figure, le réchauffeur 6 du catalyseur d'amorçage 4 étant alimenté, la vanne 17 dirige la totalité des gaz d'échappement G vers la dérivation 15, et le réchauffeur 7 du catalyseur principal 5 est éteint.

Les vannes 21, 22, 23, 24 occupent respectivement les positions α, β, β, β. Avec ce réglage, le liquide de refroidissement circule de la sortie S_{M} du moteur M vers l'entrée E_{E} de l'échangeur E, de la sortie S_{E} de cet échangeur vers l'entrée E_{A} de l'aérotherme A, et de la sortie S_{A} de cet aérotherme vers l'entrée E_{M} du moteur M.

Dans ces conditions, une partie de la chaleur transmise par le réchauffeur 6 aux gaz d'échappement G est transférée au liquide de refroidissement via l'échangeur de chaleur E, puis utilisée par l'aérotherme A pour chauffer l'habitacle du véhicule automobile.

Cette phase de fonctionnement du dispositif suivant l'invention est adaptée à un démarrage à froid, où l'on doit alimenter le réchauffeur 6 afin d'obtenir des températures de gaz d'échappement situées dans la plage d'efficacité du catalyseur d'amorçage 4, et où la température du liquide de refroidissement sortant du moteur M n'est pas suffisamment élevée pour faire fonctionner correctement l'aérotherme A.

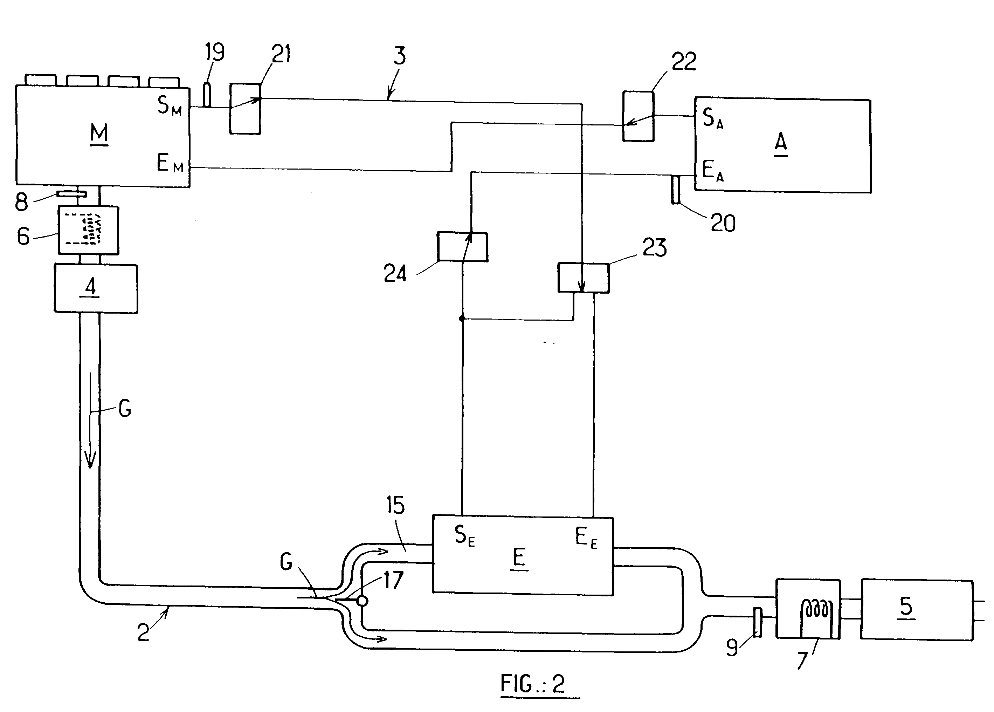

La figure 2 représente le dispositif suivant l'invention dans une deuxième phase de fonctionnement, dite « transitoire de premier type».

Comme on peut le voir sur cette figure, le réchauffeur 6 du catalyseur d'amorçage 4 est éteint, la vanne 17 dirige une partie des gaz d'échappement G vers la dérivation 15, et le réchauffeur 7 du catalyseur principal 5 est alimenté (si nécessaire).

Les vannes 21, 22, 24 occupent respectivement les positions α, β, β et la vanne 23 peut occuper une position intermédiaire entre les positions α et β. Avec ce réglage, le liquide de refroidissement circule de la sortie S_{M} du moteur M vers l'entrée E_{E} de l'échangeur E et/ou vers l'entrée E_{A} de l'aérotherme A, de la sortie S_{E} de l'échangeur E vers l'entrée E_{A} de l'aérotherme A, et de la sortie S_{A} de cet aérotherme vers l'entrée E_{M} du moteur M.

En réglant les vannes 17 et 23, on peut ajuster la quantité de chaleur transmise par les gaz d'échappement G au liquide de refroidissement via l'échangeur E, puis utilisée pour chauffer l'habitacle du véhicule automobile.

Cette phase de fonctionnement du dispositif suivant l'invention est adaptée à une situation transitoire où le moteur M est relativement peu chaud, où la température du liquide de refroidissement sortant du moteur M est encore insuffisante pour faire fonctionner correctement l'aérotherme A, et où il faut par ailleurs éviter de trop refroidir les gaz d'échappement, afin d'avoir à alimenter le moins possible le réchauffeur 7.

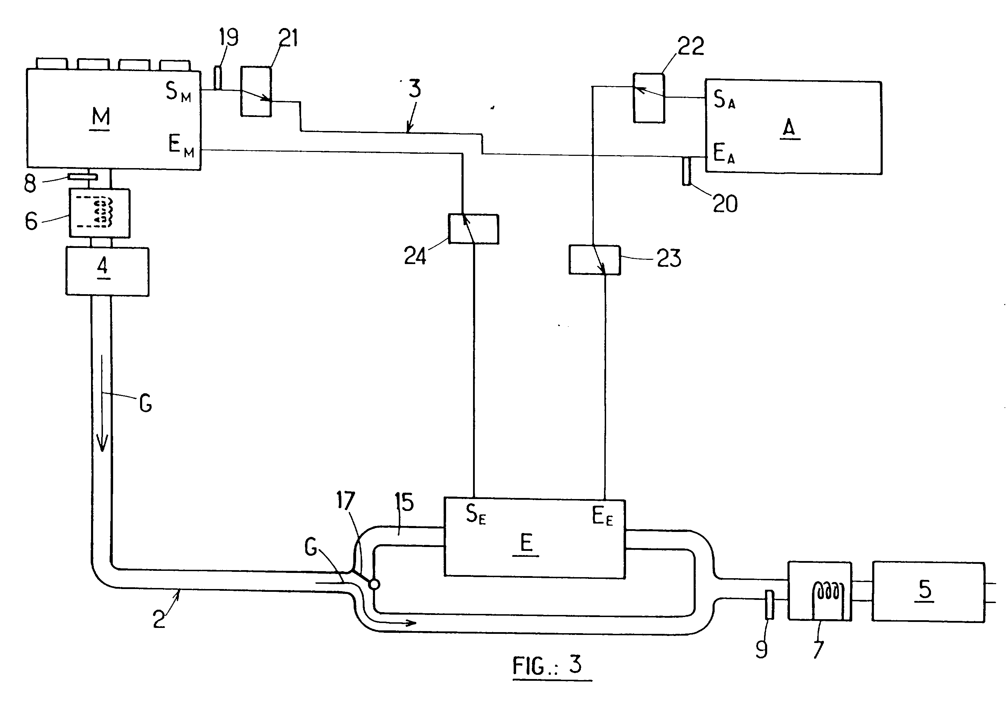

La figure 3 représente le dispositif suivant l'invention dans une troisième phase de fonctionnement, dite « transitoire deuxième type ».

Comme on peut le voir sur cette figure, le réchauffeur 6 du catalyseur d'amorçage 4 est éteint, la vanne 17 court-circuite la dérivation 15, et le réchauffeur 7 du catalyseur principal 5 est alimenté (si nécessaire).

Les vannes 21, 22, 23, 24 occupent respectivement les positions β, α, β, α. Avec ce réglage, le liquide de refroidissement circule de la sortie S_{M} du moteur M vers l'entrée E_{A} de l'aérotherme A, de la sortie S_{A} de cet aérotherme vers l'entrée E_{E} de l'échangeur E, et de la sortie S_{E} de cet échangeur vers l'entrée E_{M} du moteur M.

Dans ces conditions, on refroidit le liquide de refroidissement en aval de l'aérotherme A, et on n'effectue aucun échange de chaleur entre les gaz d'échappement G et le liquide de refroidissement.

Cette phase de fonctionnement du dispositif suivant l'invention est adaptée à une situation transitoire où le moteur M est relativement chaud, où la température du liquide de refroidissement sortant du moteur M est suffisamment élevée pour faire fonctionner correctement l'aérotherme A, et où il faut par ailleurs éviter de trop refroidir les gaz d'échappement, afin d'avoir à alimenter le moins possible le réchauffeur 7.

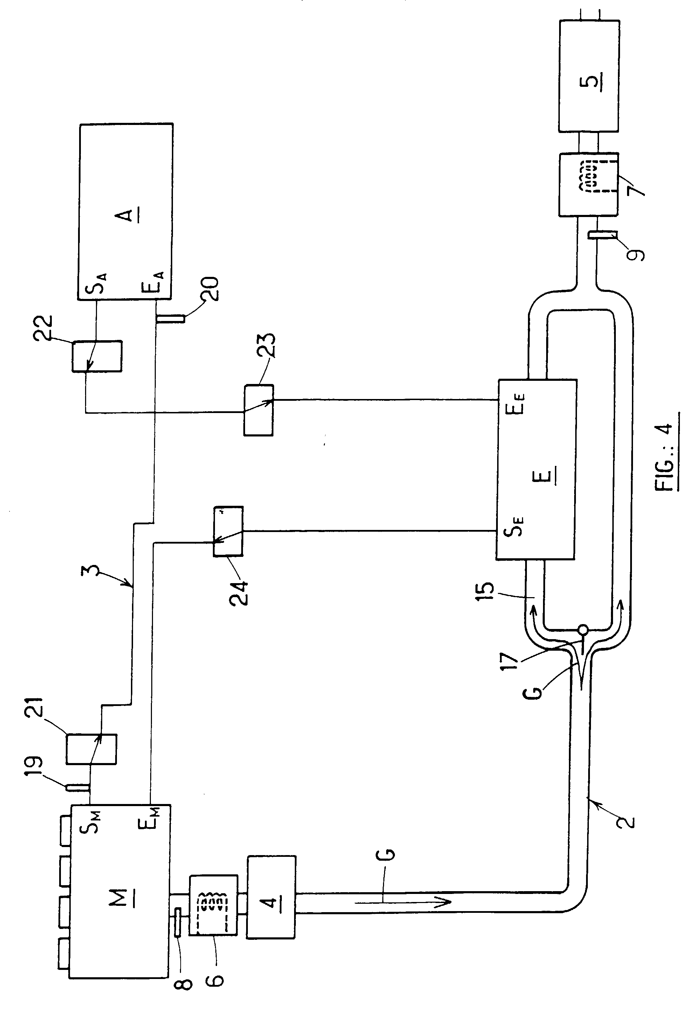

La figure 4 représente le dispositif suivant l'invention dans une quatrième phase de fonctionnement, dite « extra-urbaine ».

Comme on peut le voir sur cette figure, les réchauffeurs 6 et 7 des deux catalyseurs sont éteints, et la vanne 17 dirige une partie des gaz d'échappement G vers la dérivation 15.

Les vannes 21, 22, 23, 24 occupent les mêmes positions que dans la phase de fonctionnement dite « transitoire de deuxième type ».

Dans ces conditions, on peut transférer une partie de la chaleur des gaz d'échappement au liquide de refroidissement via l'échangeur E, en aval de l'aérotherme A.

Cette phase de fonctionnement du dispositif suivant l'invention est adaptée à une situation où le moteur M est très chaud, où la température du liquide de refroidissement sortant du moteur M est suffisamment élevée pour faire fonctionner l'aérotherme A, et où il faut par ailleurs refroidir les gaz d'échappement, afin que leur température à l'entrée du catalyseur 5 reste située dans la plage d'efficacité de cet organe.

Comme on peut le comprendre à présent, le dispositif selon l'invention et, plus généralement, le procédé mis en oeuvre, permettent d'améliorer le bilan énergétique de l'ensemble moteur M/ligne d'échappement 2/circuit de refroidissement 3.

En effet, ce dispositif permet, lors d'un démarrage à froid du moteur M, de récupérer une partie de la chaleur transmise par ce moteur et par le réchauffeur 6 aux gaz d'échappement G pour chauffer l'habitacle du véhicule automobile.

Ce dispositif permet également, lorsque le moteur M est relativement peu chaud ou relativement chaud, d'optimiser le transfert de chaleur des gaz d'échappement vers le liquide de refroidissement, de manière à assurer le chauffage de l'habitacle du véhicule automobile tout en évitant de trop refroidir les gaz d'échappement, afin d'alimenter le moins possible le réchauffeur 7.

Par ailleurs, ce dispositif permet, lorsque le moteur M est très chaud, d'abaisser la température des gaz d'échappement à l'entrée du catalyseur principal 5, afin d'assurer un dépollution efficace de ces gaz.

Bien entendu, l'invention n'est pas limitée au mode de réalisation décrit ou représenté qui a été fourni à titre d'exemple illustratif et non limitatif.

C'est ainsi par exemple que le circuit de refroidissement pourrait comporter d'autres organes de chauffage, tels qu'un organe destiné à chauffer l'air d'admission du moteur.

C'est ainsi également que les sondes de température pourraient être plus nombreuses et/ou être placées différemment.

## Revendications

1. Procédé de dépollution des gaz d'échappement et de chauffage pour véhicule automobile à moteur à combustion interne comprenant notamment a) une ligne d'échappement (2), destinée à évacuer des gaz d'échappement (G), comportant au moins un catalyseur d'amorçage (4) et un catalyseur principal (5), chacun de ces deux catalyseurs étant équipé d'un réchauffeur (6, 7) de gaz d'échappement, b) un circuit de refroidissement (3), renfermant un liquide de refroidissement, comportant au moins un organe de chauffage tel qu'un aérotherme (A), caractérisé en ce qu'on dispose des moyens d'échange de chaleur (E) entre d'une part une partie (15) de ladite ligne d'échappement (2) comprise entre lesdits catalyseurs (4, 5) et d'autre part ledit circuit de refroidissement (3), et en ce qu'on commande lesdits réchauffeurs (6, 7) et lesdits moyens d'échange de chaleur (E) en fonction de phases de fonctionnement dudit moteur (M), pour obtenir aux entrées desdits catalyseurs (4, 5) et dudit organe de chauffage (A) des températures respectives de gaz d'échappement (G) et de liquide de refroidissement situées dans les plages d'efficacité de ces organes.

2. Procédé selon la revendication 1, caractérisé en ce qu'on commande lesdits réchauffeurs (6, 7) et lesdits moyens d'échange de chaleur (E) en fonction de températures de gaz d'échappement (G) et de liquide de refroidissement relevées respectivement en certains points de ladite ligne d'échappement (2) et dudit circuit de refroidissement (3).

3. Procédé selon la revendication 2, caractérisé en ce qu'on relève lesdites températures aux entrées desdits catalyseurs (4, 5) sur ladite ligne d'échappement (2), et à la sortie (S_{M}) dudit moteur (M) et à l'entrée (E_{A}) dudit organe de chauffage (A) sur ledit circuit de refroidissement (3).

4. Procédé selon l'une quelconque des revendications précédentes, caractérisé en ce qu'il comprend une première phase, dite de démarrage à froid, pendant laquelle on alimente le réchauffeur (6) dudit catalyseur d'amorçage (4) et on transfère une partie de la chaleur ainsi transmise auxdits gaz d'échappement (G) audit liquide de refroidissement en amont dudit organe de chauffage (A), pour rendre ledit organe de chauffage (A) opérationnel immédiatement après la mise en route dudit moteur (M).

5. Procédé selon l'une quelconque des revendications précédentes, caractérisé en ce qu'il comprend une deuxième phase, dite de fonctionnement transitoire de premier type, adaptée à une situation où ledit moteur (M) est relativement peu chaud et où la température dudit liquide de refroidissement à la sortie dudit moteur (M) est encore insuffisante pour faire fonctionner correctement ledit organe de chauffage (A), pendant laquelle on éteint le réchauffeur (6) dudit catalyseur d'amorçage (4), on ajuste la quantité de chaleur transmise par lesdits gaz d'échappement (G) audit liquide de refroidissement en amont dudit organe de chauffage (A) et on alimente -si nécessaire- le réchauffeur (7) dudit catalyseur principal (5), pour optimiser la quantité de chaleur prélevée par ledit organe de chauffage (A) sur ladite ligne d'échappement (2), afin d'avoir à alimenter le moins possible le réchauffeur (7) dudit catalyseur principal (5).

6. Procédé selon l'une quelconque des revendications précédentes, caractérisé en ce qu'il comprend une troisième phase, dite de fonctionnement transitoire de deuxième type, adaptée à une situation où ledit moteur (M) est relativement chaud et où la température dudit liquide de refroidissement à la sortie dudit moteur (M) est suffisamment élevée pour faire fonctionner correctement ledit organe de chauffage (A), pendant laquelle on éteint le réchauffeur (6) dudit catalyseur d'amorçage (4), on refroidit ledit liquide de refroidissement en aval dudit organe de chauffage (A), on n'effectue aucun échange de chaleur entre lesdits gaz d'échappement (G) et ledit liquide de refroidissement, et on alimente -si nécessaire- le réchauffeur (7) dudit catalyseur principal (5), pour éviter notamment de refroidir lesdits gaz d'échappement (G), afin d'avoir à alimenter le moins possible le réchauffeur (7) dudit catalyseur principal (5).

7. Procédé selon l'une quelconque des revendications précédentes, caractérisé en ce qu'il comprend une quatrième phase, dite de fonctionnement extra-urbain, adaptée à une situation où ledit moteur (M) est très chaud, pendant laquelle on éteint les réchauffeurs (6, 7) desdits catalyseurs (4, 5) et on transfère une partie de la chaleur desdits gaz d'échappement (G) audit liquide de refroidissement en aval dudit organe de chauffage (A), pour réduire la température desdits gaz d'échappement (G) à l'entrée dudit catalyseur principal (5).

8. Dispositif de dépollution des gaz d'échappement et de chauffage pour véhicule automobile à moteur à combustion interne comprenant notamment a) une ligne d'échappement (2), destinée à évacuer des gaz d'échappement (G), comportant au moins un catalyseur d'amorçage (4) et un catalyseur principal (5), chacun de ces deux catalyseurs étant équipé d'un réchauffeur (6, 7) de gaz d'échappement, b) un circuit de refroidissement (3), renfermant un liquide de refroidissement, comportant au moins un organe de chauffage (A) tel qu'un aérotherme, caractérisé en ce qu'il comprend des moyens d'échange de chaleur (E) interposés entre d'une part une partie (15) de ladite ligne d'échappement (2) comprise entre lesdits catalyseurs (4, 5) et d'autre part ledit circuit de refroidissement (3), et des moyens de commande desdits réchauffeurs (6, 7) et desdits moyens d'échange de chaleur (E) en fonction de phases de fonctionnement dudit moteur (M), pour obtenir aux entrées desdits catalyseurs (4, 5) et dudit organe de chauffage (A) des températures respectives de gaz d'échappement (G) et de liquide de refroidissement situées dans les plages d'efficacité de ces organes.

9. Dispositif selon la revendication 8, caractérisé en ce que lesdits moyens de commande comprennent des sondes de température (8, 9, 19, 20) placées en certains points de ladite ligne d'échappement (2) et dudit circuit de refroidissement (3).

10. Dispositif selon la revendication 9, caractérisé en ce que lesdites sondes de température (8, 9, 19, 20) sont placées aux entrées desdits catalyseurs (4, 5) sur ladite ligne d'échappement (2), et à la sortie (S_{M}) dudit moteur (M) et à l'entrée (E_{A}) dudit organe de chauffage (A) sur ledit circuit de refroidissement (3).

11. Dispositif selon l'une quelconque des revendications 9 ou 10, caractérisé en ce que lesdits moyens d'échange de chaleur (E) consistent en un échangeur gaz-liquide monté sur une dérivation (15) de ladite ligne d'échappement (2), et en ce qu'une vanne (17) de régulation du débit des gaz d'échappement (G) asservie auxdites sondes de température (8, 9, 19, 20) est placée à l'entrée de ladite dérivation (15).

12. Dispositif selon la revendication 11, caractérisé en ce que ledit échangeur gaz-liquide (E) est relié audit circuit de refroidissement (3) par un système de vannes (21, 22, 23, 24) de régulation du débit de liquide de refroidissement asservies auxdites sondes de température (8, 9, 19, 20) permettant notamment, selon les états respectifs desdites vannes (21, 22, 23, 24), d'alimenter ledit échangeur gaz-liquide (E) en liquide de refroidissement:
- entre la sortie (S_{M}) dudit moteur (M) et l'entrée (E_{A}) dudit organe de chauffage (A) (pour la phase de démarrage à froid), avec si nécessaire un court-circuit partiel ou total dudit échangeur gaz-liquide (E) (pour la phase transitoire de premier type),
- entre la sortie (S_{A}) dudit organe de chauffage (A) et l'entrée (E_{M}) dudit moteur (M) (pour la phase transitoire de deuxième type et pour la phase de fonctionnement extra-urbain).
